# EUROPÄISCHE PATENTSCHRIFT

(11) **EP 3 406 180 B1**
(45) Veröffentlichungstag und Bekanntmachung des Hinweises auf die Patenterteilung: **27.11.2019**
(21) Anmeldenummer: 18172798.3
(22) Anmeldetag: 17.05.2018
(51) Int. Cl.: A47L 15/42, D06F 39/00, D06F 39/08

(54) **VERFAHREN ZUM BETRIEB EINES REINIGUNGSGERÄTS**
METHOD FOR OPERATING A CLEANING DEVICE
PROCÉDÉ DE FONCTIONNEMENT D'UN APPAREIL DE NETTOYAGE

(30) Priorität: 23.05.2017 DE 102017111187; 01.09.2017 DE 102017120151
(43) Veröffentlichungstag der Anmeldung: 28.11.2018
(73) Patentinhaber: Miele & Cie. KG, 33332 Gütersloh (DE)
(72) Erfinder: Dettmer, Martin, 33607 Bielefeld (DE); Wolf, Cornelius, 33739 Bielefeld (DE); Steinmeier, Ralph, 32052 Herford (DE); Reilmann, Michael, 33659 Bielefeld (DE); Sgurski, Eugen, 33649 Bielefeld (DE); Nierling, Andreas, 49326 Melle (DE); Bertram, Andre, 33609 Bielefeld (DE); Dahms, Tobias, 30519 Hannover (DE)

(56) Entgegenhaltungen:
- EP-A1- 3 141 176
- DE-A1- 10 357 642
- DE-A1-102015 203 532

## Beschreibung

Die Erfindung betrifft ein Verfahren zum Betrieb eines Reinigungsgeräts, insbesondere einer Wasch- oder Geschirrspülmaschine, mit einem einen Reinigungsraum bereitstellenden Reinigungsbehälter und einer Wärmepumpeneinrichtung, die einen innerhalb eines Wassertanks angeordneten Verdampfer aufweist.

Ein gattungsgemäßes Reinigungsgerät ist aus der EP 3 141 176 A1 bekannt.

Die darin beschriebene Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülgutes mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Reinigungsgeräte können bekanntermaßen mit einer Wärmepumpeneinrichtung ausgestattet sein, um den Energieverbrauch insbesondere bei einem Aufheizen der Spülflotte zu reduzieren.

Die aus der EP 3 141 176 A1 bekannte Geschirrspülmaschine verfügt über eine sogenannte Wasser-Wasser-Wärmepumpeneinrichtung. Im bestimmungsgemäßen Verwendungsfall wird mit einer solchen Wärmepumpeneinrichtung einem Flüssigkeitsreservoir Wärmeenergie entzogen. Die EP 3 141 176 A1 sieht zu diesem Zweck einen offenen Wassertank vor, der den Verdampfer der Wärmepumpeneinrichtung beherbergt. Im Betriebsfall kommt es infolge eines Wärmeenergieentzugs zu einer Abkühlung des im Tank als Wärmeträgermedium bevorrateten Wassers. Eine solche Abkühlung kann bis zur Vereisung des Wassers vorgenommen werden.

Von grundsätzlicher Problematik bei der Verwendung einer Wasser-Wasser-Wärmepumpeneinrichtung ist, dass ein bestimmungsgemäßer Einsatz des Reinigungsgeräts unter gleichzeitiger Nutzung der Wärmepumpeneinrichtung energetisch nur dann sinnvoll ist, wenn das im Wassertank bevorratete und als Wärmeträgermedium dienende Wasser eine gewisse Mindesttemperatur aufweist. Sollte das Wasser nach einer vorangegangenen Benutzung des Reinigungsgeräts noch zu kühl oder sogar gefroren sein, muss mit einem bestimmungsgemäßen Einsatz der Wärmepumpeneinrichtung bis zum Erreichen der Mindesttemperatur des Wassers gewartet werden, was bei noch gefrorenem Wasser durchaus 24 Stunden in Anspruch nehmen kann. Eine bestimmungsgemäße Verwendung des Reinigungsgeräts unter Einsatz der Wärmepumpeneinrichtung ist mithin pro Tag nur einmal möglich.

Um diesem Problem zu begegnen, ist mit der EP 3 141 176 A1 unter anderem vorgeschlagen worden, innerhalb des Wassertanks einen Wärmetauscher anzuordnen. Dieser Wärmetauscher ist strömungstechnisch an den Spülraum angeschlossen, so dass zum Ende eines Spülprogramms noch warme Spülflotte durch den Wärmetauscher gepumpt werden kann, bevor sie zur Beendigung des Spülprogramms durch Abpumpen verworfen wird. Der Wärmetauscher erlaubt mithin eine Energierückführung aus der noch warmen, aber nicht mehr benötigten Spülflotte auf das im Tank bevorratete Wasser.

Die DE 102015203532 A1 offenbart eine Geschirrspülmaschine, bei der Frischwasser einem seitlich am Spülbehälter angeordneten Wassertank zugeleitet wird und von dort aus über einen Überlauf in den Spülbehälter fließt. Im Wassertank ist der Verdampfer einer Wärmepumpeneinrichtung angeordnet.

Obgleich sich die vorbekannte Konstruktion im alltäglichen Praxiseinsatz bewährt hat, ist es die **Aufgabe** der Erfindung, eine Konstruktion vorzuschlagen, die eine energetisch noch effektivere Verfahrensdurchführung gestattet.

Zur **Lösung** dieser Aufgabe wird mit der Erfindung ein Verfahren zum Betrieb eines Reinigungsgeräts, insbesondere einer Wasch- oder Geschirrspülmaschine, mit den Merkmalen von Anspruch 1 vorgeschlagen.

Der erfindungsgemäßen Verfahrensdurchführung liegt die Erkenntnis zugrunde, dass es energetisch effizienter ist, dem Reinigungsbehälter vor Beginn einer Reinigungsflottenaufheizung Wasser mit einer höchstmöglichen Wassertemperatur zuzuführen. Mit der Erfindung wird deshalb vorgeschlagen, dass dem Reinigungsbehälter vor Beginn eines ersten Reinigungsprogrammschritts, demgemäß ein Aufheizen der Reinigungsflotte stattfindet, anstelle von Frischwasser, welches ohne es zu bevorraten direkt aus der hausseitigen Wasserversorgungseinrichtung bezogen wurde, im Wassertank der Wärmepumpeneinrichtung bevorratetes Wasser zugeführt wird. Denn im Unterschied zu Frischwasser aus der Wasserversorgungseinrichtung, das typischerweise eine Temperatur von ca. 15° C aufweist, kann das im Wassertank der Wärmepumpeneinrichtung bevorratete Wasser eine höhere Temperatur bis hin zu Raumtemperatur besitzen, die typischerweise zwischen 20° C und 23° C liegt. Das im Wassertank der Wärmepumpeneinrichtung bevorratete Wasser ist also typischerweise wärmer als Frischwasser, so dass im nachfolgenden Programmschritt des Aufheizens weniger Energie zur Erreichung einer Reinigungsflottenzieltemperatur benötigt wird. Dabei ist der erste Programmschritt eines Reinigungsprogramms, demgemäß ein Aufheizen von im Reinigungsbehälter befindlicher Reinigungsflotte stattfindet, regelmäßig der nach einem optionalen Vorspülen stattfindende Programmschritt des Reinigens.

Für einen bestimmungsgemäßen Betrieb der Wärmepumpeneinrichtung bedarf es einer Wiederauffüllung des Wassertanks. Erfindungsgemäß ist deshalb vorgesehen, dass nach einer Überführung des im Wassertank bevorrateten Wassers, oder einer Teilmenge davon, in den Reinigungsbehälter eine Auffüllung des Wassertanks mit Frischwasser stattfindet, und zwar bis zum Erreichen eines vorgebbaren maximalen Wasserfüllstandes. Bei dem Frischwasser, mit dem der Wassertank aufgefüllt wird, handelt es sich um Wasser, welches unter Umgehung des Reinigungsraums, also insbesondere ohne dass es in einem Programmschritt bereits als Reinigungsflotte verwendet wurde, von der hausseitigen Wasserversorgungseinrichtung in den Wassertank gelangt. Dabei kann es sich um Hartwasser handeln, vorzugsweise handelt es sich jedoch um Weichwasser, also bereits im Wassereinlauf des Reinigungsgeräts mittels einer Enthärtungseinrichtung enthärtetes Wasser. Es kann auch aus einem weiteren Vorratsbehälter für Frischwasser, etwa einer Wassereinlauftasche stammen.

Zwar gestaltet sich auch ein Betrieb der Wärmepumpeneinrichtung mit wärmerem Wasser als Frischwasser als effektiver, doch wurde erfindungsgemäß erkannt, dass es energetisch insgesamt effizienter ist, dem Reinigungsprozess Wärmeenergie in Form von vorgewärmtem Wasser zuzuführen, als durch eine höhere Wassertemperatur im Wassertank der Wärmepumpeneinrichtung einen kurzzeitig effizienteren Betrieb der Wärmepumpeneinrichtung zu ermöglichen. Erfindungsgemäß ist deshalb vorgesehen, das im Wassertank der Wärmepumpeneinrichtung bevorratete und auf Raumtemperatur vorgewärmte Wasser, oder zumindest eine Teilmenge davon, dem Reinigungsbehälter als Reinigungsflotte zuzuführen. Der insoweit entleerte oder teilweise entleerte Wassertank wird mit Frischwasser aufgefüllt, und zwar bis zum Erreichen eines vorgegebenen oder vorgebbaren maximalen Wasserfüllstandes, was alsdann einen bestimmungsgemäßen Betrieb der Wärmepumpeneinrichtung ermöglicht. Bei Erreichen des vorgegebenen oder vorgebbaren maximalen Wasserfüllstandes wird das Auffüllen des Wassertanks beendet. Nach dem beschriebenen Einleiten von Wasser aus dem Wassertank in den Reinigungsbehälter und Auffüllen des Wassertanks mit Frischwasser erfolgt ein Programmschritt, in dem ein Aufheizen von im Reinigungsbehälter befindlicher Reinigungsflotte unter Verwendung der Wärmepumpeneinrichtung stattfindet.

Bei einer vollständigen Befüllung des Reinigungsbehälters mit Wasser aus dem Wassertank der Wärmepumpeneinrichtung, das beispielsweise eine Temperatur von 23° C aufweist, bleibt die Mischtemperatur des in den Reinigungsraum eingeleiteten Wassers bei 23° C. Erfolgt statt dessen im Unterschied hierzu ein Wassereinlauf in den Reinigungsbehälter mit unmittelbar aus der hausseitigen Wasserversorgungseinrichtung bezogenem Frischwasser, das eine Temperatur von zum Beispiels 15° C aufweist, so stellt sich - unter Berücksichtigung des etwa auf Raumtemperatur befindlichen Reinigungsbehälters, des Reinigungsguts und der Reinigungsflottenleitungen - im Reinigungsbehälter eine Mischtemperatur des Wassers von ca. 20° C bis 21 ° C ein. Durch die demgegenüber nach der erfindungsgemäßen Verfahrensdurchführung sich einstellende um ca. 2 bis 3° C höhere Temperatur des Wassers im Reinigungsraum reduziert sich der Energieverbrauch um ca. 3 bis 8 Wh und die Reinigungsprogrammlaufzeit verkürzt sich um ca. zwei bis drei Minuten. Insofern erweist sich die erfindungsgemäße Verfahrensdurchführung als gegenüber dem Stand der Technik energieeffizienter.

Um das Reinigungsgerät besonders energieeffizient zu betreiben, ist es bevorzugt, die für den Reinigungsschritt erforderliche Wassermenge im größtmöglichen Maße mit vorgewärmtem Wasser aus dem Wassertank abzudecken. Der Wassertank weist daher vorzugsweise mindestens ein Volumen auf, welches die für einen Programmschritt, insbesondere den Programmschritt REINIGEN, erforderliche Wassermenge vollständig aufnehmen kann, insbesondere beträgt sein Fassungsvermögen 2 bis 12 Liter, vorzugsweise 3,5 bis 6 Liter. Sollte das im Wassertank bevorratete Wasser nicht ausreichen für die bestimmungsgemäße Durchführung eines Reinigungsschritts, so ist die fehlende Füllmenge im Reinigungsbehälter mit kaltem Frischwasser direkt aus der hausseitigen Wasserversorgungseinrichtung oder mit Frischwasser aus einem weiteren Vorratsbehälter aufzufüllen.

Gemäß einer ersten alternativen Durchführung des erfindungsgemäßen Verfahrens wird in diesem Zusammenhang vorgeschlagen, dass der Wassertank zunächst vollständig entleert und anschließend mit Frischwasser bis zum Erreichen des vorgebbaren maximalen Wasserfüllstandes wieder aufgefüllt wird. Sollte das aus dem Wassertank in den Reinigungsbehälter überführte Wasser für die Durchführung des anstehenden Programmschritts nicht ausreichend sein, so ist die benötigte Restmenge durch Frischwasser auszugleichen, was dem Reinigungsbehälter vorzugsweise direkt, also unmittelbar von der hausseitigen Wasserversorgungseinrichtung oder aus einem weiteren Vorratsbehälter, etwa einer Wassereinlauftasche zugeführt wird. Im Reinigungsbehälter stellt sich dann eine Mischung aus vorgewärmtem Wasser aus dem Wassertank einerseits und direkt zugeführtem Frischwasser andererseits ein.

Gemäß einer zweiten alternativen Durchführung des erfindungsgemäßen Verfahrens ist vorgesehen, dass vor einer Überführung von im Wassertank befindlichem Wasser in den Reinigungsbehälter in den Wassertank Frischwasser eingeführt wird. Gemäß dieser Verfahrensdurchführung findet also keine direkte Befüllung des Reinigungsbehälters mit Frischwasser statt. Dieses wird vielmehr in den Wassertank eingeleitet, aus dem dann die Wasserüberführung in den Reinigungsbehälter stattfindet.

Gemäß einem weiteren Merkmal der Erfindung ist in diesem Zusammenhang vorgesehen, dass so viel Frischwasser in den Wassertank eingeführt wird, dass der vorgebbare maximale Wasserfüllstand überschritten wird. Sobald infolge der Frischwasserzuführung in den Wassertank ein Überschreiten des vorgebbaren maximalen Wasserfüllstandes stattfindet, beginnt ein Überführen des im Wassertank befindlichen Wassers in den Reinigungsbehälter. Gemäß dieser Verfahrensalternative ist mithin vorgesehen, dass der Wasserfüllstand im Wassertank durch die Zuführung von Frischwasser angehoben wird. Sobald die Füllstandserhöhung einsetzt, erfolgt ein Überführen des überschüssigen Wassers in den Reinigungsbehälter.

Bevorzugterweise ist in diesem Zusammenhang ferner vorgesehen, dass dem Wassertank Frischwasser in einer solchen Menge zugeführt wird, dass mit Erreichen einer zur Durchführung des Programmschritts benötigten Menge an Reinigungsflotte im Reinigungsbehälter der vorgebbare maximale Wasserfüllstand im Wassertank erreicht ist. Gemäß dieser Weiterbildung des erfindungsgemäßen Verfahrens ist mithin vorgesehen, dass dem Wasserbehälter insgesamt nur so viel Frischwasser zugeführt wird, dass nach Abschluss einer Überführung des überschüssigen Wassers aus dem Wassertank in den Reinigungsbehälter sowohl die benötigte Menge an Reinigungsflotte im Reinigungsbehälter vorhanden ist, als auch der vorgebbare maximale Wasserfüllstand im Wassertank nicht überschritten, bzw. dieser erreicht ist.

Zur Überführung des Wassers aus dem Wassertank in den Reinigungsbehälter können gemäß einem weiteren Merkmal der Erfindung eine Pumpe und/oder ein Saugheber vorgesehen sein.

Gemäß einem weiteren Merkmal der Erfindung findet eine Sensierung der Wasserfüllstandshöhe im Wassertank statt. Dabei kann ein vorgebbarer maximaler Wasserstand und/oder ein vorgebbarer minimaler Wasserstand sensiert werden. Zu diesem Zweck können entsprechende Sensoren zum Einsatz kommen, die in kommunikationstechnischer Verbindung mit der Pumpe und/oder Leitungsventilen stehen.

Gemäß einer weiteren Ausgestaltung ist vorgesehen, dass die Ansaugleitung der Pumpe und/oder des Saughebers mit Erreichen des vorgebbaren maximalen Wasserfüllstandes Luft ziehen/zieht. Diese Ausgestaltung hat den Vorteil, dass auf jegliche Sensorik verzichtet werden kann, weil die Positionierung der Ansaugleitung wassereingangsseitig so ausgerichtet ist, dass eine Unterschreitung des vorgebbaren maximalen Wasserfüllstandes deshalb nicht möglich ist, weil die Ansaugleitung mit Erreichung des vorgebbaren maximalen Wasserfüllstandes Luft zieht, ein Mehr an Wasser dem Wasserbehälter also nicht entnommen werden kann. Außerdem ist durch eine derartige hochliegende Anordnung der Ansaugleitung gewährleistet, dass der wärmste Teil der im Wassertank befindliche Wassermenge in den Reinigungsraum gefördert wird. Vorzugsweise ist als maximaler Füllstand ein Füllstand von weniger als 90%, insbesondere ein Füllstand zwischen 80 und 90% gewählt.

Gemäß einer alternativen Ausgestaltung kann die Ansaugleitung der Pumpe und/oder des Saughebers auf einem vorgebbaren, insbesondere wesentlich niedrigeren als dem vorgebbaren maximalen Wasserfüllstand, insbesondere auf einem minimalen Wasserfüllstand positioniert werden. Diese Anordnung ermöglicht ebenfalls ohne eine Füllstandssensierung das Überführen einer definierten Wassermenge. Die Ansaugleitung zieht bei dem Erreichen des minimalen Wasserfüllstands Luft. Der Tank wird nachfolgend, insbesondere nach dem Abschalten der Pumpe, mit einer vorgegebenen Wassermenge aufgefüllt. Die Wassermenge kann beispielsweise über den Flügelradzähler im Wasserzulauf bemessen werden oder aus einem weiteren Wasservorratsbehälter mit bekannter Füllmenge, etwa der in der Seitenwand angeordneten Wassereinlauftasche, aufgefüllt werden. Durch diese Form der Ausführung kann ebenfalls auf eine Sensorik verzichtet werden, außerdem kann der Füllstand im Tank über die Lebensdauer konstant gehalten und eine Einleitung von unmittelbar aus der hausseitigen Wasserversorgungseinrichtung herrührenden Frischwasser in den Reinigungsraum vermieden werden.

Gemäß einer weiteren Ausgestaltung des erfindungsgemäßen Verfahrens wird die Temperatur des im Wassertank bevorrateten Wassers sensiert oder ein von der Temperatur des im Wassertank bevorrateten Wassers beeinflusster Parameter bestimmt. Dies kann durch einen im Wassertank angeordneten Temperatursensor erfolgen. Um den Wassertank jedoch besonders einfach, robust und wenig störanfällig auszubilden, findet im Wassertank selbst keine Temperatursensierung statt, vorzugsweise ist der Wassertank sensorlos ausgebildet. Stattdessen wird auf die Temperatur des im Wassertank bevorrateten Wassers durch eine Temperaturmessung im Spülbehälter, insbesondere im Sammeltopf, geschlossen. Hierfür kann ein ohnehin zur Messung und Kontrolle der Spülflottentemperatur dort vorgesehener Temperatursensor eingesetzt werden, so dass ein ansonsten erforderlicher zusätzlicher Sensor eingespart werden kann. Der Temperatursensor nimmt eine Messung eines Temperaturwerts vor, während Wasser entsprechend des erfindungsgemäßen Verfahrens aus dem Wassertank in den Reinigungsbehälter bzw. den Sammeltopf einfließt oder unmittelbar nachdem eine erste Wassermenge entsprechend des erfindungsgemäßen Verfahrens aus dem Wassertank in den Reinigungsbehälter bzw. den Sammeltopf eingeflossen ist. Dabei ist die erste Wassermenge vorzugsweise wesentlich kleiner als eine für den ersten Programmschritt eines Reinigungsprogramms bzw. den Programmschritt REINIGEN erforderliche Wassermenge, und/oder beträgt die erste Wassermenge weniger als 1 Liter, insbesondere 300 bis 900 ml, vorzugsweise 500 bis 700 ml.

Vorzugsweise nimmt der Temperatursensor darüber hinaus zuvor bereits eine Messung eines Temperaturausgangswerts vor, nämlich unmittelbar bevor das Wasser entsprechend des erfindungsgemäßen Verfahrens aus dem Wassertank in den Reinigungsbehälter bzw. den Sammeltopf einfließt.

Nach Messung des Temperaturausgangswerts und des Temperaturwerts vergleicht eine Steuereinrichtung des Reinigungsgeräts die festgestellte Temperaturabsenkung, also Temperaturdifferenz zwischen diesen Werten mit einem vorgegebenen oder vorgebbaren, in der Geräteelektronik hinterlegten ersten Grenzwert. Abhängig davon, ob die Temperaturdifferenz diesen ersten Grenzwert überschreitet oder nicht, wird das Reinigungsprogramm in unterschiedlicher Weise weitergeführt. Ist der erste Grenzwert nicht überschritten, wird die Wassereinleitung aus dem Wassertank in den Reinigungsbehälter bzw. den Sammeltopf fortgesetzt, d.h. eine weitere Wassermenge aus dem Wassertank in den Reinigungsbehälter bzw. den Sammeltopf geleitet. Ist der erste Grenzwert dagegen überschritten, wird in dem Reinigungsprogramm kein Wasser aus dem Wassertank in den Reinigungsbehälter bzw. den Sammeltopf geleitet, sondern die restliche für das Reinigungsprogramm erforderliche Wassermenge aus der hausseitigen Frischwasserversorgung unter Umgehung des Wassertanks in den Reinigungsbehälter bzw. den Sammeltopf geleitet. Durch diese unterschiedliche Verfahrensführung kann verhindert werden, dass im Falle einer unzureichenden thermischen Regeneration des Wassertanks eine große Menge von sehr kaltem Wasser in den Reinigungsbehälter eingelassen wird, was die Energieeffizienz des Verfahrens verschlechtern würde.

Alternativ oder zusätzlich kann die Steuereinrichtung nach Messung des Temperaturausgangswerts und des Temperaturwerts die festgestellte Temperaturabsenkung, also Temperaturdifferenz zwischen diesen Werten mit einem vorgegebenen oder vorgebbaren, in der Geräteelektronik hinterlegten zweiten Grenzwert vergleichen. Ist der zweite Grenzwert nicht überschritten, wird im nachfolgenden Programmschritt des Reinigungsprogramms die Wärmepumpeneinrichtung betrieben, um die Reinigungsflotte aufzuheizen. Ist der zweite Grenzwert dagegen überschritten, wird die Wärmepumpeneinrichtung in dem Reinigungsprogramm dagegen nicht betrieben. Stattdessen erfolgt in diesem Reinigungsprogramm die Aufheizung der Reinigungsflotte mit einer anderen Heizeinrichtung.

Der erste und zweite Grenzwert können identisch sein. In diesem Fall wird bei Überschreiten des Grenzwertes zum einen kein Wasser mehr aus dem Wassertank in den Reinigungsbehälter bzw. den Sammeltopf geleitet, zum anderen die Wärmepumpeneinrichtung in dem Reinigungsprogramm nicht betrieben.

Alternativ ist der zweite Grenzwert höher als der erste Grenzwert. In diesem Fall gibt es nach Feststellung der Temperaturdifferenz und Vergleich mit den beiden Grenzwerten drei Verfahrensalternativen. Bei Unterschreiten des ersten Grenzwertes wird die Wassereinleitung aus dem Wassertank in den Reinigungsbehälter bzw. den Sammeltopf fortgesetzt und im nachfolgenden Programmschritt des Reinigungsprogramms wird die Wärmepumpeneinrichtung betrieben, um die Reinigungsflotte aufzuheizen. Bei Überschreitung des ersten Grenzwertes nicht aber des zweiten Grenzwertes wird zwar kein Wasser mehr aus dem Wassertank in den Reinigungsbehälter bzw. den Sammeltopf geleitet, im nachfolgenden Programmschritt des Reinigungsprogramms die Wärmepumpeneinrichtung jedoch betrieben, um die Reinigungsflotte aufzuheizen. Bei Überschreiten auch des zweiten Grenzwertes wird sowohl kein Wasser mehr aus dem Wassertank in den Reinigungsbehälter bzw. den Sammeltopf geleitet, als auch die Wärmepumpeneinrichtung in dem Reinigungsprogramm nicht betrieben.

Mit der erfindungsgemäßen Verfahrensdurchführung wird insgesamt ein Betrieb eines Reinigungsgeräts, insbesondere einer Geschirrspülmaschine, ermöglicht, der energieeffizienter ist. Im Unterschied zum Stand der Technik kann damit in vorteilhafter Weise bei gleichbleibender Funktionalität eine Energieeinsparung erreicht werden. Von Vorteil in diesem Zusammenhang ist ferner, dass eine Wiederbefüllung des Wassertanks nur bis zu einem vorgebbaren maximalen Wasserfüllstand erlaubt ist. Es ist mithin verfahrensbedingt stets ein Luftpolster zwischen dem vom Wassertank bevorrateten Wasser einerseits und der oberen Wassertankabdeckung andererseits vorgesehen. Dieses Luftpolster sorgt für eine thermische Entkopplung von Reinigungsbehälter und dem unterhalb des Reinigungsbehälters und/oder im Sockelbereich des Reinigungsgeräts angeordneten Wassertank, so dass nicht ungewollt ein Wärmetransfer aus dem Reinigungsbehälter bzw. aus dem im Reinigungsbehälter befindlichen Wasser auf den Wassertank bzw. auf das dort bevorratete Wasser stattfinden kann. Dieser Vorteil wirkt sich insbesondere dann aus, wenn nach einem bestimmungsgemäßen Betrieb der Wärmepumpeneinrichtung das im Wassertank bevorratete Wasser zumindest teilweise eingefroren ist.

Weitere Merkmale und Vorteile der Erfindung ergeben sich aus der nachfolgenden Beschreibung anhand der Figuren. Dabei zeigen
- Fig. 1 bis 3: jeweils in schematischer Darstellung ein für eine erfindungsgemäße Verfahrensdurchführung entsprechend ausgerüstetes Reinigungsgerät in einer jeweiligen Ausführungsform und
- Fig. 4: in schematischer Darstellung eine Geschirrspülmaschine nach dem Stand der Technik.

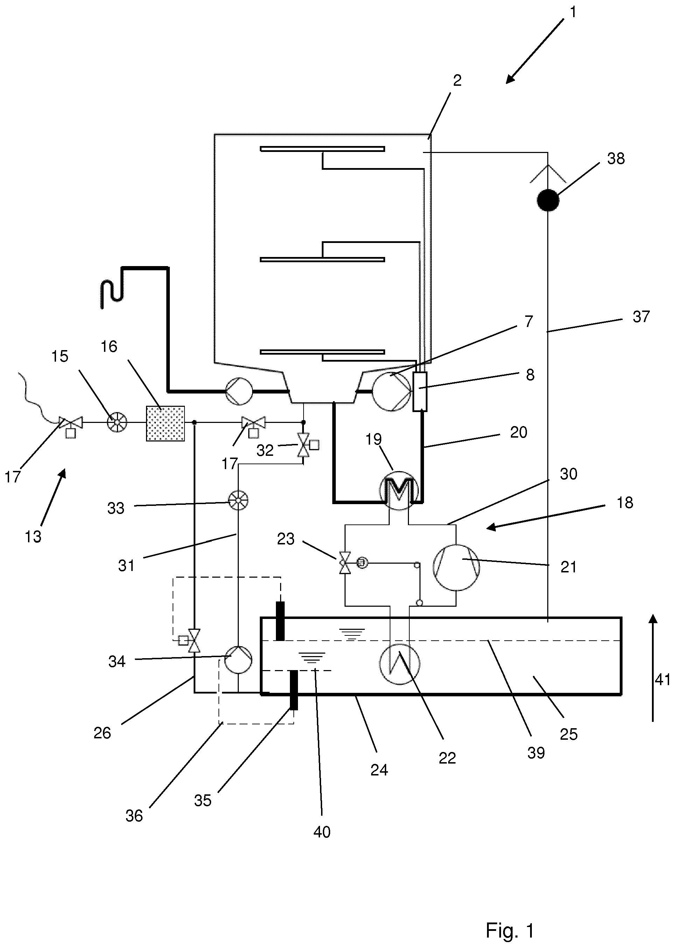

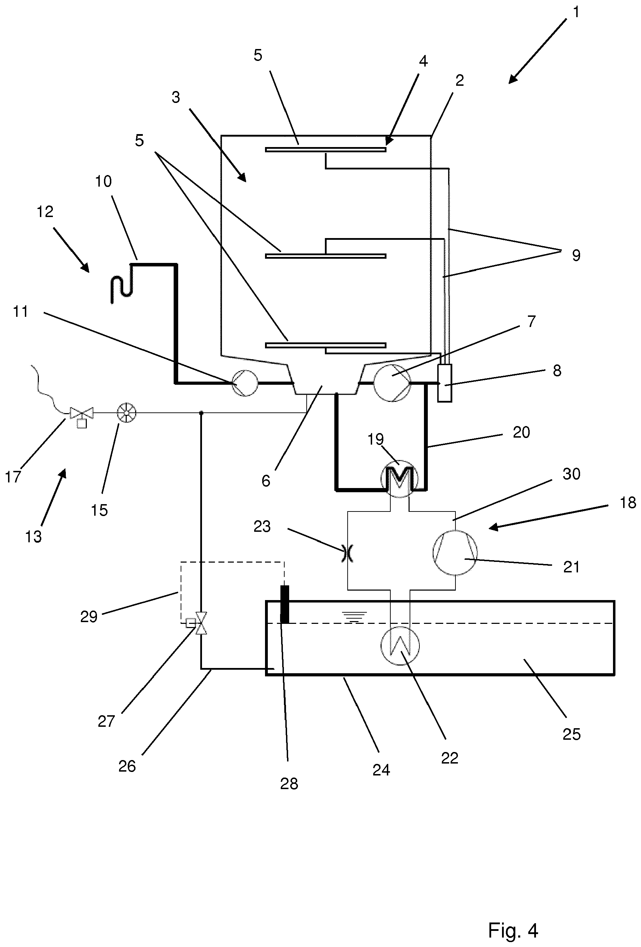

Fig. 4 lässt in schematischer Darstellung den prinzipiellen Aufbau einer Geschirrspülmaschine 1 nach dem Stand der Technik erkennen, wie er auch den erfindungsgemäßen Ausführungsformen gemäß der Figuren 1 bis 11 zugrundeliegt.

Die Geschirrspülmaschine 1 verfügt über ein in den Figuren nicht näher dargestelltes Gehäuse, das unter anderem einen Spülbehälter 2 aufnimmt. Der Spülbehälter 2 stellt seinerseits einen Spülraum 3 bereit, der im bestimmungsgemäßen Verwendungsfall der Aufnahme von zu reinigendem Spülgut dient, der sog. Beladung.

Zur Beschickung von zu reinigendem Spülgut mit Spülflotte dient eine Sprüheinrichtung 4, die innerhalb des Spülbehälters 2 angeordnet ist. Bevorzugterweise verfügt eine solche Sprüheinrichtung 4 über Sprüharme 5, die jeweils verdrehbar innerhalb des Spülbehälters 2 angeordnet sind.

Der Spülraum 3 mündet in einen im Detail nicht näher dargestellten Sammeltopf 6 des Spülbehälters 2 ein, an den eine Umwälzpumpe 7 strömungstechnisch angeschlossen ist. Über entsprechende Versorgungsleitungen 9 sind die Sprüharme 5 der Sprüheinrichtung 4 an die Umwälzpumpe 7 strömungstechnisch angeschlossen, und zwar unter Zwischenschaltung einer Wasserweiche 8. Im bestimmungsgemäßen Verwendungsfall kann damit eine Beschickung der Sprüheinrichtung 4 mit Spülflotte mittels der Umwälzpumpe 7 stattfinden, wobei Dank der Wasserweiche 8 eine Beschickung der Sprüharme 5 wahlweise stattfinden kann.

Die Geschirrspülmaschine 1 verfügt des Weiteren über einen Ablauf 12, über den gebrauchte und nicht mehr benötigte Spülflotte verworfen wird. Es ist zu diesem Zweck eine strömungstechnisch an den Sammeltopf 6 angeschlossene Ablaufleitung 10 vorgesehen, in die eine Ablaufpumpe 11 integriert ist. Sich im Sammeltopf 6 ansammelnde Spülflotte kann bei eingeschalteter Pumpe 11 über die Ablaufleitung 10 abgepumpt und damit verworfen werden.

Zwecks Zuführung von Frischwasser ist ein Frischwasseranschluss 13 vorgesehen. Dieser verfügt über eine an den Sammeltopf 6 strömungstechnisch angeschlossene Frischwasserleitung 14, in die ein Flügelradzähler 15 integriert ist. Entsprechende Ventile 17 ermöglichen ein fluiddichtes Verschließen der Frischwasserleitung 14.

Die Geschirrspülmaschine 1 verfügt des Weiteren über eine Wärmepumpeneinrichtung 18. Diese weist einen Verdichter 21, einen Verflüssiger 19, ein Expansionsorgan 23, einen Verdampfer 22 sowie einen diese Baukomponenten strömungstechnisch miteinander verbindenden Strömungskreislauf 30 auf, in dem ein Arbeitsmedium geführt ist.

Der Verdampfer 22 ist innerhalb eines Wassertanks 24 angeordnet, der mit Wasser 25 als Wärmeträgermedium befüllt ist.

Im bestimmungsgemäßen Verwendungsfall der Wärmepumpeneinrichtung 18 findet mit Hilfe des Verflüssigers 19 ein Wärmeübertrag von dem in Strömungskreislauf 30 der Wärmepumpeneinrichtung 18 geführten Arbeitsmedium auf die Spülflotte statt. Zu diesem Zweck ist ein an die Umwälzpumpe 7 strömungstechnisch angeschlossener Strömungskreislauf 20 für Spülflotte vorgesehen. Die im Betriebsfall im Verflüssiger 19 durch Verflüssigung des Arbeitsmediums frei werdende Wärmeenergie wird mithin auf die im Strömungskreislauf 20 umgewälzte Spülflotte übertragen.

Gemäß der gezeigten Ausführungsform ist der Wassertank 24 über eine Leitung 26 an die Frischwasserleitung 14 strömungstechnisch angeschlossen, was es im Bedarfsfall gestattet, den Wassertank 24 mit Frischwasser zu befüllen. Zur Einstellung eines vorgebbaren Wasserpegels innerhalb des Wassertanks 24 ist ein Füllstandssensor 28 vorgesehen, der in kommunikationstechnischer Verbindung 29 mit einem in die Leitung 26 integrierten Ventil 27 steht.

Eine erste Ausführungsform der Erfindung ist in Fig. 1 dargestellt. In Ergänzung zur Ausgestaltung nach dem Stand der Technik gemäß Fig. 4 ist das in Fig. 1 dargestellte Reinigungsgerät in Ausgestaltung einer Geschirrspülmaschine 1 mit einer Leitung 31 ausgerüstet, die den Wassertank 24 strömungstechnisch mit dem Sammeltopf 6 und damit mit dem als Spülbehälter 2 ausgebildeten Reinigungsbehälter koppelt. In die Leitung 31 ist ein Absperrventil 32, ein Flügelradzähler 33 sowie eine Pumpe 34 integriert. Dabei kann mittels der Pumpe 34 bei geöffnetem Ventil 32 das im Wassertank 24 bevorratete Wasser 25 abgepumpt und dem Spülbehälter 2 zugeführt werden.

Die Geschirrspülmaschine 1 nach Fig. 1 verfügt des Weiteren über einen zweiten Füllstandssensor 35, der in kommunikationstechnischer Verbindung 36 mit der Pumpe 34 steht. Die dargestellte Ausführungsform ermöglicht es mithin, einen maximalen Wasserfüllstand 39 einerseits sowie einen minimalen Wasserfüllstand 40 andererseits zu detektieren.

Es ist des Weiteren eine Überlaufleitung 37 vorgesehen, die den Wassertank 24 mit dem Spülbehälter 2 strömungstechnisch verbindet. In die Überlaufleitung 37 ist ein Auslaufschutz 38 integriert, bei dem es sich beispielsweise um einen Schwimmkörper, ein Rückschlagventil und/oder dergleichen handeln kann.

Die in Fig. 1 gezeigte Ausführungsform erlaubt die Durchführung eines erfindungsgemäßen Verfahrens wie folgt.

Vor Beginn eines Reinigungsprogramms ist der Wassertank 24 aufgrund eines vorangegangenen und bereits abgeschlossenen Reinigungsprogramms typischerweise mit Wasser 25 befüllt, und zwar mit einem Wasserpegel, der dem maximalen Wasserfüllstand 39 entspricht. Das Wasser 25 hat je nach zurückliegender Zeitspanne zwischen vorangegangenem Reinigungsprogramm und nunmehr zu startendem Reinigungsprogramm eine entsprechende Vorwärmtemperatur, vorzugsweise Raumtemperatur, die je nach Aufstellungsort typischerweise zwischen 20° C und 23° C liegt.

Vor Beginn eines Programmschritts, der eine Reinigungsflottenaufheizung vorsieht, beispielsweise dem Reinigen, wird dem Reinigungsbehälter 2 das im Wassertank 24 bevorratete, vorgewärmte Wasser 25 mittels der Pumpe 34 zugeführt. Dabei kann aufgrund der strömungstechnischen Anbindung der Leitung 31 an die Leitung 26 ein nahezu vollständiges Entleeren des Wassertanks 24 stattfinden, da die Leitung 26 in Höhenrichtung 41 am Wassertank 24 unten angeschlossen ist. Über den Flügelradzähler 33 kann die einlaufende Wassermenge sensiert werden.

Sollte die dem Wassertank 24 entnommene Menge an vorgewärmtem Wasser für die Durchführung eines Programmschritts nicht ausreichend sein, ist die fehlende Restmenge an Reinigungsflotte durch Frischwasser auszugleichen, was dem Reinigungsbehälter 2 über die Frischwasserleitung 14 zugeführt werden kann.

Nach einer Überführung des im Wassertank 24 bevorrateten Wassers 25 in den Reinigungsbehälter 2 findet eine Wiederauffüllung des Wassertanks 24 statt, und zwar mittels Frischwasser, das dem Wassertank 24 über die Leitung 26 zugeführt wird. Dabei dient der Füllstandssensor 28 dazu, dass eine Befüllung des Wassertanks 24 nur bis zum Erreichen des maximalen Wasserfüllstands 39 erfolgt. Mit Erreichen dieses Wasserfüllstandes ist oberhalb des sich einstellenden Wasserpegels noch ein Luftpolster zwischen Wasserpegel und oberer Tankabdeckung ausgebildet, was eine thermische Entkopplung vom Reinigungsbehälter erbringt, so dass es nicht zu einem ungewollten Wärmeentzug aus dem Reinigungsbehälter 2 in den Wassertank 24 kommen kann.

Optional ist ein zweiter Füllstandssensor 35 vorgesehen, der es ermöglicht, einen minimalen Wasserfüllstand 40 zu detektieren. Dies kann beispielsweise erforderlich sein, wenn eine vollständige Entleerung des Wassertanks 24 nur in Ausnahmefällen gestattet sein soll, beispielsweise für den Transport der Geschirrspülmaschine oder im Falle des "Überwinterns" in einem Ferienhaus.

Die erfindungsgemäße Ausgestaltung erbringt jedenfalls verfahrensseitig den Vorteil, dass eine Befüllung des Reinigungsbehälters vor Beginn einer Heizphase mit vorgewärmtem Wasser aus dem Wassertank 24 und nicht - wie nach dem Stand der Technik üblich - mit Frischwasser erfolgt. Dies erbringt in vorteilhafter Weise eine Steigerung der Energieausnutzung, womit sich das erfindungsgemäße Verfahren als effizienter erweist.

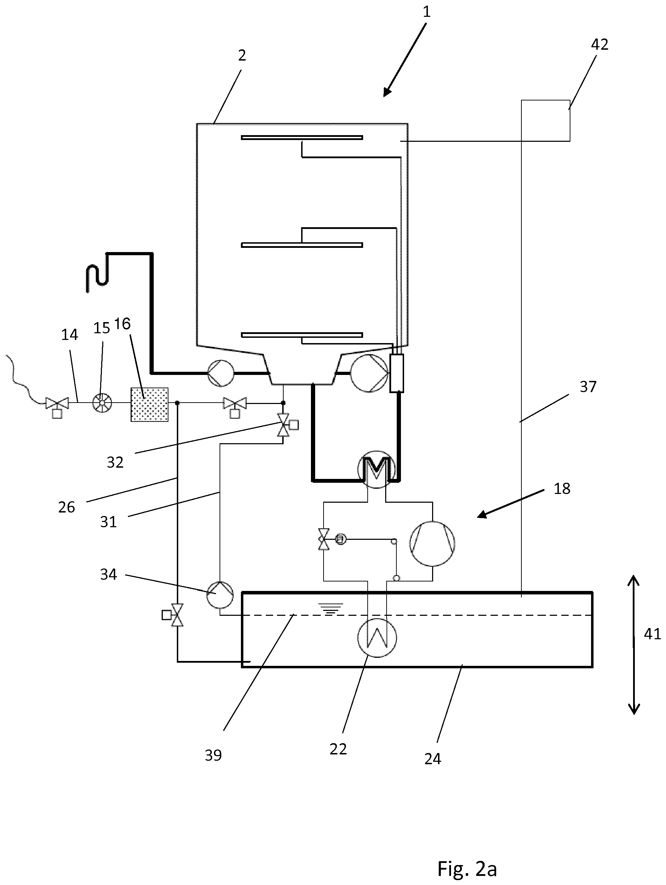

Eine alternative Ausführungsform zeigt Fig. 2a. Danach mündet die Leitung 31 direkt in den Wassertank 24, und zwar mit Bezug auf die Höhenrichtung 41 in einer Höhe, die dem maximalen Wasserfüllstand 39 entspricht. Damit ist erreicht, dass mittels der Pumpe 34 dem Wassertank 24 dann kein Wasser mehr entnommen werden kann, wenn der Wasserpegel den maximalen Wasserfüllstand 39 erreicht hat. Eine Entleerung des Wassertanks 24 unter den maximalen Wasserfüllstand 39 ist mittels der Pumpe 34 also nicht möglich, was es in vorteilhafter Weise erübrigt, Sensorik innerhalb des Wassertanks 24 vorzusehen, wie dies die Ausführungsform nach Fig. 1 zeigt.

Zur Befüllung des Reinigungsbehälters 2 mit Wasser 25 aus dem Wassertank 24 ist bei der Ausführungsform nach Fig. 2a zunächst Frischwasser in den Wassertank 24 einzuleiten. Dies geschieht über die Leitung 26. Infolge der Frischwassereinleitung in den Wassertank 24 steigt der Wasserpegel innerhalb des Wassertanks 24, so dass die Pumpe 34 zur Überführung von Wasser 25 aus dem Tank 24 in den Reinigungsbehälter 2 eingeschaltet werden kann, wenn der Wasserpegel im Wassertank 24 den maximalen Wasserfüllstand 39 übersteigt. Dabei wird dem Wassertank 24 bevorzugterweise so viel Frischwasser zugeführt, dass einerseits dem Reinigungsbehälter 2 hinreichend viel Wasser als Reinigungsflotte zugeführt wird, dass eine bestimmungsgemäße Reinigungsprogrammdurchführung absolviert werden kann, und dass andererseits mit Erreichen der für eine Reinigungsprogrammdurchführung erforderliche Menge an Reinigungsflotte auch der maximale Wasserfüllstand 39 im Wassertank 24 erreicht ist.

Es ist bevorzugt, dass der Sauganschluss der Pumpe 34 auf einem entsprechend hohen Niveau positioniert ist. Wird das Niveau des Saugstutzens erreicht, saugt die Pumpe 34 Luft. Der Saugstutzen ist bevorzugterweise so angeordnet, dass die Pumpe 34 bei einem Füllstand zwischen 80% und 90% Luft saugt.

Der Einlaufstutzen befindet sich im Unterschied hierzu idealerweise im unteren Bereich des Wassertanks 24 oder wird im Wassertank 24 nach unten geführt. Zeitgleich oder um eine in der Elektronik des Reinigungsgeräts 1 hinterlegte Startverzögerung von 15 bis 45 Sekunden wird die Pumpe 34 nach Beginn eines Frischwassereinlaufs gestartet. Das in den Wassertank 24 einströmende Frischwasser ist typischerweise kälter als das vom Wassertank 24 bevorratete Wasser 25. Das kältere Frischwasser weist eine höhere Dichte als das vorgewärmte Wasser 25 auf, so dass das Frischwasser mit seiner Einleitung das vorgewärmte Wasser nach oben drückt, was dann mittels der Pumpe 34 abgepumpt und dem Reinigungsbehälter 2 zugeführt wird.

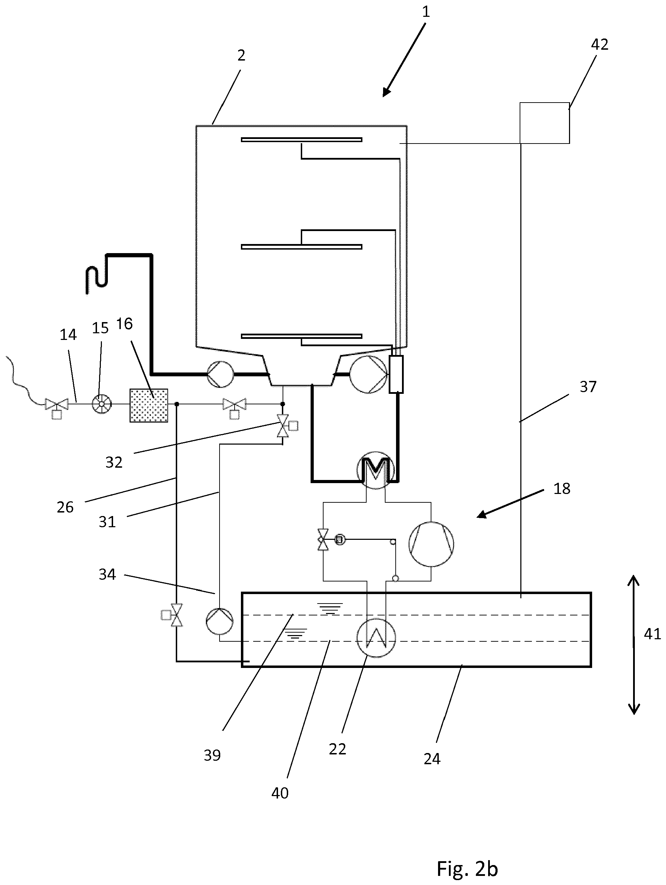

Die Ausführungsform von Fig. 2b unterscheidet sich vorrichtungsseitig nur geringfügig von jener in Fig. 2a gezeigten Ausführungsform, nämlich nur dadurch, dass die Leitung 31 in den Wassertank 24 in Bezug auf die Höhenrichtung 41 in einer Höhe mündet, die einem minimalen Wasserfüllstand 40 entspricht. Diese Höhe liegt unterhalb, insbesondere wesentlich unterhalb der Höhe, die dem maximalen Wasserfüllstand 39 entspricht.

Zur Befüllung des Reinigungsbehälters 2 wird bei der Ausführungsform nach Fig. 2b Wasser aus dem - bei Abschluss eines früheren Programms oder Programmschritts gefüllten - Wassertank 24 in den Reinigungsbehälter 2 eingeleitet, indem die Pumpe 34 eingeschaltet wird. Dabei sinkt der Wasserpegel im Wassertank 24 bis zum Erreichen des minimalen Wasserfüllstands 40, bei dem die Pumpe 34 Luft saugt. Der Wassertank 34 wird vorzugsweise nachfolgend, insbesondere nach dem Abschalten der Pumpe 34, mit einer vorgegebenen Wassermenge, welche insbesondere der Differenz der Volumina bei maximalem Wasserfüllstand 39 und minimalem Wasserfüllstand 40 entspricht, wieder aufgefüllt. Die Wassermenge kann beispielsweise über den Flügelradzähler 15 in der Frischwasserleitung 14 bemessen werden oder aus einem weiteren Wasservorratsbehälter mit bekannter Füllmenge, etwa einer in der Seitenwand angeordneten Wassereinlauftasche, aufgefüllt werden.

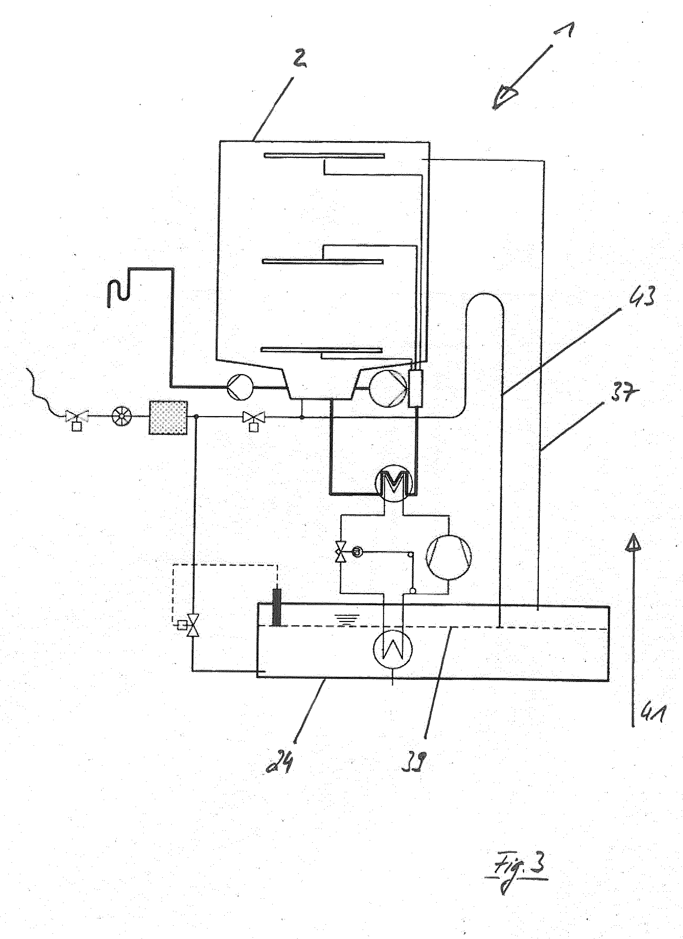

Fig. 3 zeigt eine weitere Ausführungsform. Dabei kommt gemäß dieser Ausführungsform keine Pumpe 34, sondern ein Saugheber 43 zum Einsatz. Der prinzipielle Verfahrensablauf ist indes identisch. Beim Befüllen des Wassertanks 24 mit Frischwasser wird ein im Auslauf des Wassertanks 24 angeordneter Saugheber 43 befüllt, entlüftet und damit aktiviert. Nach Abschalten des Wasserzulaufs saugt der Saugheber 43 das im Wassertank 24 bevorratete Wasser 25 bis auf das von der Anschlussposition des Saughebers 43 im Wassertank 24 vorgegebene Niveau leer. Fig. 3 zeigt in diesem Zusammenhang die Wasserwege nur schematisch. Zur ordnungsgemäßen Funktion muss sich zumindest der entleerbare Teil des Wassertanks 24 oberhalb des Einlaufniveaus zum Spülraum 3 befinden. Die Höhenverhältnisse sind konstruktiv insoweit so auszulegen, dass die Funktion des Saughebers 43 sichergestellt ist.

Eine ordnungsgemäße Funktion entweder der Pumpe 34 oder des Saughebers 43 macht es erforderlich, dass eine Be- bzw. Entlüftung des Wassertanks 24 ermöglich ist. Eine solche Be- und Entlüftung kann beispielsweise mit dem Auslauf ganz oder teilweise kombiniert werden. Die Be- und Entlüftung kann in dem Spülbehälter 2 stattfinden, zu welchem Zweck eine entsprechende Leitung 37 vorgesehen ist, über die auch ein Überlauf realisiert sein kann. Bevorzugterweise ist in die Leitung 37 ein Auslaufschutz 38 (vgl. Fig. 1) oder eine Labyrinthführung 42 (vgl. Fig. 2a und Fig. 2b) integriert.

### Bezugszeichen

- 1: Reinigungsgerät bzw. Geschirrspülmaschine
- 2: Reinigungsbehälter bzw. Spülbehälter
- 3: Reinigungsraum bzw. Spülraum
- 4: Sprüheinrichtung
- 5: Sprüharm
- 6: Sammeltopf
- 7: Umwälzpumpe
- 8: Wasserweiche
- 9: Leitung
- 10: Ablaufleitung
- 11: Ablaufpumpe
- 12: Ablauf
- 13: Frischwasseranschluss
- 14: Frischwasserleitung
- 15: Flügelradzähler
- 16: Enthärter
- 17: Ventil
- 18: Wärmepumpeneinrichtung
- 19: Verflüssiger
- 20: Strömungskreislauf
- 21: Verdichter
- 22: Verdampfer
- 23: Drossel
- 24: Wassertank
- 25: Wasser
- 26: Leitung
- 27: Ventil
- 28: Füllstandssensor
- 29: kommunikationstechnische Verbindung
- 30: Strömungskreislauf
- 31: Leitung
- 32: Ventil
- 33: Flügelradzähler
- 34: Pumpe
- 35: Füllstandssensor
- 36: kommunikationstechnische Verbindung
- 37: Überlaufleitung
- 38: Auslaufschutz
- 39: maximaler Wasserfüllstand
- 40: minimaler Wasserfüllstand
- 41: Höhenrichtung
- 42: Labyrinthführung
- 43: Saugheber

## Patentansprüche

1. Verfahren zum Betrieb eines Reinigungsgeräts, insbesondere einer Geschirrspülmaschine (1) mit einem einen Reinigungsraum (3) bereitstellenden Reinigungsbehälter (2) und einer Wärmepumpeneinrichtung (18), die einen Verdichter (21), einen Verflüssiger (19), ein Expansionsorgan (23), einen Verdampfer (22) sowie einen diese Baukomponenten strömungstechnisch miteinander verbindenden Strömungskreislauf (30) aufweist, in dem ein Arbeitsmedium geführt ist, wobei der Verdampfer (22) innerhalb eines Wassertanks (24) angeordnet ist, wobei vor Beginn eines ersten Programmschritts eines Reinigungsprogramms, in welchem Programmschritt ein Aufheizen von im Reinigungsbehälter (2) befindlicher Reinigungsflotte stattfindet, im Wassertank (24) bevorratetes Wasser (25) zumindest teilweise in den Reinigungsbehälter (2) überführt wird,
wobei bei Betrieb der Wärmepumpeneinrichtung (18) mit Hilfe des Verflüssigers (19) ein Wärmeübertrag von dem in Strömungskreislauf (30) der Wärmepumpeneinrichtung (18) geführten Arbeitsmedium auf die Reinigungsflotte stattfindet,
wobei mit einem im Reinigungsbehälter (2), insbesondere im Sammeltopf (6), angeordneten Temperatursensor eine Temperaturmessung vorgenommen wird,
**dadurch gekennzeichnet, dass**
der Temperatursensor eine Messung eines Temperaturwerts vornimmt, während Wasser aus dem Wassertank (24) in den Reinigungsbehälter (2), insbesondere den Sammeltopf (6) einfließt oder unmittelbar nachdem eine erste Wassermenge, welche wesentlich kleiner als eine für den ersten Programmschritt des Reinigungsprogramms erforderliche Wassermenge ist, aus dem Wassertank (24) in den Reinigungsbehälter (2) bzw. den Sammeltopf (6) eingeflossen ist,
wobei der Temperatursensor eine Messung eines Temperaturausgangswerts vornimmt unmittelbar bevor das Wasser aus dem Wassertank (24) in den Reinigungsbehälter (2) bzw. den Sammeltopf (6) einfließt,
wobei eine Steuereinrichtung des Reinigungsgeräts die festgestellte Temperaturdifferenz zwischen Temperaturausgangswerts und Temperaturwert mit einem vorgegebenen oder vorgebbaren, in der Geräteelektronik hinterlegten Grenzwert vergleicht,
wobei, wenn der Grenzwert nicht überschritten ist, die Wassereinleitung aus dem Wassertank (24) in den Reinigungsbehälter (2) bzw. den Sammeltopf (6) fortgesetzt wird,
und wobei andernfalls, wenn der Grenzwert überschritten ist, eine weitere Wassereinleitung aus dem Wassertank (24) in den Reinigungsbehälter (2) oder den Sammeltopf (6) unterbleibt und stattdessen die restliche für das Reinigungsprogramm erforderliche Wassermenge aus der hausseitigen Frischwasserversorgung (13) unter Umgehung des Wassertanks (24) in den Reinigungsbehälter (2) bzw. den Sammeltopf (6) geleitet wird,
wobei der Wassertank (24) durch die Überführung des Wassers (25) in den Reinigungsbehälter (2) vollständig oder teilweise entleert wird und wobei der Wassertank (24) anschließend mit Frischwasser bis zum Erreichen eines vorgegebenen oder vorgebbaren maximalen Wasserfüllstandes (39) wieder aufgefüllt wird.

2. Verfahren nach Anspruch 1, bei dem bis zum Erreichen einer zur Durchführung des Programmschritts benötigten Menge an Reinigungsflotte Frischwasser direkt in den Reinigungsbehälter (2) eingeleitet wird.

3. Verfahren nach einem der vorhergehenden Ansprüche, bei dem so viel Frischwasser in den Wassertank (24) eingeleitet wird, dass der vorgebbare maximale Wasserfüllstand (39) überschritten wird.

4. Verfahren nach einem der vorhergehenden Ansprüche, bei dem mit Überschreiten des vorgebbaren maximalen Wasserfüllstandes (39) ein Überführen des im Wassertank (24) bevorrateten Wassers (25) in den Reinigungsbehälter (2) beginnt.

5. Verfahren nach einem der vorhergehenden Ansprüche, bei dem dem Wassertank (24) Frischwasser in einer solchen Menge zugeführt wird, dass mit Erreichen einer zur Durchführung des Programmschritts benötigten Menge an Reinigungsflotte im Reinigungsbehälter (2) der vorgebbare maximale Wasserfüllstand (39) im Wassertank (24) erreicht ist.

6. Verfahren nach einem der vorhergehenden Ansprüche, bei dem das im Wassertank (24) bevorratete Wasser (25) mittels einer Pumpe (34) und/oder eines Saughebers (43) in den Reinigungsbehälter (2) überführt wird.

7. Verfahren nach einem der vorhergehenden Ansprüche, bei dem eine Sensierung des Wasserfüllstandes im Wassertank (24) durchgeführt wird.

8. Verfahren nach einem der vorhergehenden Ansprüche 6 oder 7, bei dem die Ansaugleitung der Pumpe (34) und/oder des Saughebers (43) mit Erreichen des vorgebbaren maximalen Wasserfüllstandes (39) Luft zieht.

9. Verfahren nach einem der vorhergehenden Ansprüche, bei dem abhängig vom Ergebnis der Temperaturmessung entweder im nachfolgenden Programmschritt des Reinigungsprogramms die Wärmepumpeneinrichtung betrieben wird, um die Reinigungsflotte aufzuheizen, oder ein Betrieb der Wärmepumpeneinrichtung in dem Reinigungsprogramm unterbleibt.

## Claims

1. Method for operating a cleaning appliance, in particular a dishwasher (1) having a cleaning container (2) that provides a cleaning chamber (3) and having a heat pump device (18) that comprises a compressor (21), a condenser (19), an expansion element (23), an evaporator (22), and a flow circuit (30) fluidically interconnecting these structural components, in which flow circuit a working medium is guided, the evaporator (22) being arranged inside a water tank (24), water (25) stored in the water tank (24) being transferred at least in part into the cleaning container (2) before the start of a first program step of a cleaning program, in which program step cleaning solution located in the cleaning container (2) is heated, with heat being transferred from the working medium guided in the flow circuit (30) of the heat pump device (18) to the cleaning solution by means of the condenser (19) when the heat pump device (18) is operated, the temperature being measured by a temperature sensor arranged in the cleaning container (2), in particular in the collecting vessel (6), **characterised in that** the temperature sensor measures a temperature value while water flows from the water tank (24) into the cleaning container (2), in particular into the collecting vessel (6), or immediately after a first amount of water, which is substantially smaller than an amount of water required for the first program step of the cleaning program, has flowed from the water tank (24) into the cleaning container (2) or the collecting vessel (6), the temperature sensor measuring the initial temperature value directly before the water flows from the water tank (24) into the cleaning container (2) or the collecting vessel (6), a control device of the cleaning appliance comparing the established temperature difference between the initial temperature value and the temperature value with a predetermined or predeterminable threshold value stored in the electronic system of the appliance, where, if the threshold value is not exceeded, water continues to be introduced from the water tank (24) into the cleaning container (2) or the collecting vessel (6), and where otherwise, if the threshold value is exceeded, further passing of the water from the water tank (24) into the cleaning container (2) or the collecting vessel (6) is prevented and instead the remaining amount of water required for the cleaning program is guided out of the household fresh water supply (13) into the cleaning container (2) or the collecting vessel (6), bypassing the water tank (24), the water tank (24) being completely or partially emptied by the transfer of the water (25) into the cleaning container (2) and the water tank (24) then being refilled with fresh water until a predetermined or predeterminable maximum water fill level (39) is reached.

2. Method according to claim 1, wherein fresh water is introduced directly into the cleaning container (2) until an amount of cleaning solution required to carry out the program step is reached.

3. Method according to either of the preceding claims, wherein so much fresh water is introduced into the water tank (24) that the predeterminable maximum water fill level (39) is exceeded.

4. Method according to any of the preceding claims, wherein when the predeterminable maximum water fill level (39) is exceeded, the water (25) stored in the water tank (24) starts to be transferred into the cleaning container (2).

5. Method according to any of the preceding claims, wherein fresh water is supplied to the water tank (24) in such an amount that, when an amount of cleaning solution required to carry out the program step is reached in the cleaning container (2), the predeterminable maximum water fill level (39) in the water tank (24) is reached.

6. Method according to any of the preceding claims, wherein the water (25) stored in the water tank (24) is transferred into the cleaning container (2) by means of a pump (34) and/or a siphon (43).

7. Method according to any of the preceding claims, wherein the water fill level in the water tank (24) is detected.

8. Method according to either of preceding claims 6 or 7, wherein the suction line of the pump (34) and/or of the siphon (43) draws air when the predeterminable maximum water fill level (39) is reached.

9. Method according to any of the preceding claims, wherein, depending on the result of the temperature measurement, either the heat pump device is operated in order to heat the cleaning solution in the subsequent program step of the cleaning program, or the heat pump device is not operated in the cleaning program.

## Revendications

1. Procédé permettant de faire fonctionner un appareil de nettoyage, en particulier un lave-vaisselle (1) comportant un espace de nettoyage (3) doté d'un réservoir de nettoyage (2) et un dispositif de pompe à chaleur (18) qui comporte un compresseur (21), un condenseur (19), un organe de détente (23), un évaporateur (22) ainsi qu'un circuit d'écoulement (30) qui relie fluidiquement ces composants et qui guide un fluide de travail, l'évaporateur (22) étant disposé à l'intérieur d'un réservoir d'eau (24), dans lequel, avant le début d'une première étape de programme d'un programme de nettoyage selon lequel un chauffage du liquide de nettoyage se trouvant dans le réservoir de nettoyage (2) se produit, l'eau stockée (25) dans le réservoir d'eau (24) est amenée au moins partiellement dans le réservoir de nettoyage (2), dans lequel le transfert de chaleur du fluide de travail amené dans le circuit d'écoulement (30) du dispositif de pompage à chaleur (18) au liquide de nettoyage est effectué à l'aide du condensateur (19) lors du fonctionnement dudit dispositif de pompe à chaleur (18), dans lequel une mesure de température est effectuée à l'aide d'un capteur de température disposé dans le réservoir de nettoyage (2), en particulier dans le bac collecteur (6), **caractérisé en ce que** le capteur de température effectue une mesure d'une valeur de température, tandis que de l'eau s'écoule du réservoir d'eau (24) dans le réservoir de nettoyage (2), en particulier dans le bac collecteur (6) ou immédiatement après qu'une première quantité d'eau sensiblement inférieure à celle requise pour la première étape de programme du programme de nettoyage s'est écoulée du réservoir d'eau (24) dans le réservoir de nettoyage (2) et/ou dans le bac collecteur (6), le capteur de température effectuant une mesure d'une valeur de sortie de température immédiatement avant l'écoulement de l'eau du réservoir d'eau (24) dans le réservoir de nettoyage (2) et/ou le bac collecteur (6), un dispositif de commande de l'appareil de nettoyage comparant la différence de température détectée entre la valeur de sortie de température et la valeur de température présentant une valeur limite prédéfinie ou pouvant être prédéfinie, enregistrée dans le système électronique de l'appareil, dans lequel, si la valeur limite n'est pas dépassée, le déversement d'eau du réservoir d'eau (24) dans le réservoir de nettoyage (2) et/ou dans le bac collecteur (6) se poursuit, et à défaut, si la valeur limite est dépassée, l'eau cesse de se déverser du réservoir d'eau (24) dans le réservoir de nettoyage (2) ou dans le bac collecteur (6) et, au lieu de cela, la quantité d'eau restante nécessaire pour le programme de nettoyage est conduite de l'alimentation en eau fraîche (13) côté bâtiment dans le réservoir de nettoyage (2) et/ou dans le bac collecteur (6) en contournant le réservoir d'eau (24), le réservoir d'eau (24) étant entièrement ou partiellement vidé par le transfert de l'eau (25) dans le réservoir de nettoyage (2), et le réservoir d'eau (24) étant ensuite à nouveau rempli d'eau fraîche jusqu'à un niveau d'eau (39) maximal prédéfini ou pouvant être prédéfini.

2. Procédé selon la revendication 1, dans lequel de l'eau fraîche est introduite directement dans le réservoir de nettoyage (2) jusqu'à ce qu'une quantité de liquide de nettoyage requise pour réaliser l'étape de programme soit atteinte.

3. Procédé selon l'une des revendications précédentes, dans lequel une quantité d'eau fraîche est introduite dans le réservoir d'eau (24), telle que le niveau d'eau maximal pouvant être prédéfini (39) est dépassé.

4. Procédé selon l'une des revendications précédentes, dans lequel un transfert de l'eau (25) stockée dans le réservoir d'eau (24) au réservoir de nettoyage (2) commence lorsque le niveau d'eau maximal pouvant être prédéfini (39) est dépassé.

5. Procédé selon l'une des revendications précédentes, dans lequel de l'eau fraîche est amenée au réservoir d'eau (24) en une quantité telle que, lorsqu'une quantité de liquide de nettoyage dans le réservoir de nettoyage (2), nécessaire pour réaliser l'étape de programme est atteinte, le niveau d'eau maximal pouvant être prédéfini (39) dans le réservoir d'eau (24) est atteint.

6. Procédé selon l'une des revendications précédentes, dans lequel de l'eau (25) stockée dans le réservoir d'eau (24) est transférée au réservoir de nettoyage (2) au moyen d'une pompe (34) et/ou d'un siphon (43).

7. Procédé selon l'une des revendications précédentes, dans lequel une détection du niveau d'eau dans le réservoir d'eau (24) est effectuée.

8. Procédé selon l'une des revendications précédentes 6 ou 7, dans lequel la conduite d'aspiration de la pompe (34) et/ou du siphon (43) aspire de l'air lorsque le niveau d'eau maximal pouvant être prédéfini (39) est atteint.

9. Procédé selon l'une des revendications précédentes, dans lequel, en fonction du résultat de la mesure de température, soit le dispositif de pompe à chaleur est utilisé à l'étape suivante du programme de nettoyage pour chauffer le liquide de nettoyage, soit le dispositif de pompe à chaleur n'est pas utilisé dans le programme de nettoyage.
